# EUROPEAN PATENT APPLICATION

(11) **EP 1 189 371 A2**
(43) Date of publication of application: **20.03.2002**
(21) Application number: 01306777.2
(22) Date of filing: 08.08.2001
(51) Int. Cl.: H04H 1/00, G06F 1/30, H04N 7/16

(54) **Means for insuring controlled shutdown of a processor in a digital broadcast receiver when a power failure is being detected**

(30) Priority: 12.08.2000 GB 0019797
(71) Applicant: Pace Micro Technology PLC, Shipley, West Yorkshire BD18 3LF (GB)
(72) Inventor: Cook, Michael, Rossendale, Lancashire BB4 4BG (GB)
(74) Representative: Wood, Graham

(57) **Abstract**

In accordance with the present invention, there is provided sufficient time for a shut-down procedure to take place before a mains power failure affects the processor capability of the broadcast data receiver. The time available between detection in accordance with the invention and the actual failure of the power supply at the processor of the broadcast data receiver is sufficient to allow a shut down procedure to be performed on all or selected components of a broadcast data receiver to prevent damage to the same by the power failure.

## Description

The invention to which this application relates is to an improvement in the operation of broadcast data receivers which is a form of electrical and electronic apparatus provided for the reception of data which is broadcast from a remote location and then transmitted via any of satellite, cable or terrestrial transmission systems to a number of receivers. When received, the data is processed to allow the generation of video, audio and auxiliary functions via a television set or other display screen and speakers.

As part of the processing of the data via a broadcast data receiver, there is a conditional access system utilised which allows the broadcast data receiver to be rendered inoperable if the user of the receiver is not authorised or has not subscribed to the particular service. In order to allow this to be achieved, it is typically the case that there is a processor integrated circuit provided by the broadcast service provider which can be activated and selectively deactivated by the broadcast service provider from time to time as they require. In order to render the receiver operable, the processor is typically mounted on a card, the size of a credit card, although it should be appreciated that this could be of any desired form, and said card is then inserted into a location slot in the receiver and in which position the processor on the card can be accessed and the receiver rendered operable. It will therefore be appreciated that for the receiver, the processor on the card is extremely important and it is important to the broadcaster that it is not damaged as this can cause failure of service to the user who may then become unhappy at the service being provided.

In testing it has been shown in certain conditions that the processor on the card can be damaged and the damage can be sufficient to cause the processor to be inoperable, and hence the receiver to be inoperable. In one circumstance, if there is a loss of power to the receiver from the mains, then either the loss of power or subsequent regaining of power supply can cause irreparable damage to the processor and the aim of the present invention is to provide a system whereby the avoidance of this damage can be achieved.

In a first aspect of the invention there is provided electrical apparatus for the processing of digital data and said apparatus is rendered operable by the insertion of a processor into the same for connection to the processing capability to render the capability operational and detection means are provided in connection with the mains power supply to the receiver, prior to rectification of the supply and characterised in that upon detection of failure or absence of AC pulses in the power supply, the processor capability, or parts of the processor capability of the apparatus are shut down in a controlled manner by the electrical apparatus.

By allowing early detection of the failure of a power supply, the relevant shut-down procedures can be performed prior to the mains power supply failure affecting the process capability of the broadcast data receiver.

In one embodiment, the shut-down procedure includes shutting down the processing capability of the processor mounted on a card which is inserted into the receiver and hence prevents damage to said processor. This therefore means that the processor can remain inserted in the broadcast data receiver without the risk of damage and, when mains power supply is reinstated, the processor can again be used.

In one embodiment, in addition or alternatively to the shut down of the processor mounted on the card, other shut-down procedures can be implemented such as, for example, storing data relating to a channel which is being viewed at the instant of failure, and/or other user settings which have been selected by the user prior to the failure of power supply with said data being stored in a storage means.

In accordance with the present invention, there is provided sufficient time for a shut-down procedure to take place before the power failure at the processor of the broadcast data receiver. In one embodiment, the time available between detection in accordance with the invention and the actual failure of the power supply at the processor of the broadcast data receiver is approximately ½ a second.

In a further aspect of the invention there is provided a broadcast data receiver, said receiver provided for the reception and processing of digital data for the generation of video, audio and auxiliary functions, said receiver is rendered operable by the insertion of a processor integrated circuit into the same for connection to the processing capability within the receiver and wherein detection means are provided in connection with the mains electricity supply to the receiver, prior to rectification and wherein upon detection of failure of AC pulses in the power supply, the processor capability, or parts of the processor capability of the broadcast data receiver are shut down.

A specific embodiment of the invention is now described; wherein
Figure 1 illustrates a device known as a smartcard; and
Figure 2 illustrates the Smart card f Figure 1 inserted in a broadcast data receiver in use.

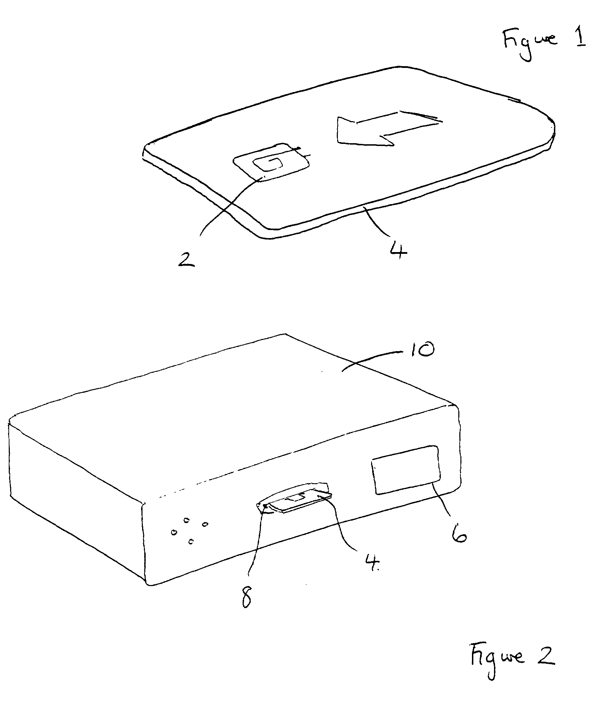

When a broadcast data receiver is in operation, part of the conditional access system for operation of the receiver is provided by a processor 2 which is mounted on a support such as a credit card sized card 4 for insertion into the receiver, typically known as a smart card. When inserted into the receiver 6, in slot 8 as shown in Figure 2, the processor is positioned within the receiver housing 10 and connected in a socket to the rest of the processor system within the receiver so that the processor 2 on the card allows the completion of the system and the system to be operable. The power, clock signals and other processing services are provided to the processor 2 on the card 4 by the receiver system.

In use it is found that if power and clock signals are suddenly lost during use of the processor on the card, it can result in damage to the processor and in turn render the card 4 useless.

While it is known to detect loss of power, the problem with the conventional means for detecting loss of power such as detecting a change in the regulated power supply voltage is that there is very little time between the change being detected and the total loss of power. In most cases, the time available is insufficient to allow the shut-down of relevant processing capabilities within the broadcast data receiver and the processor on the card.

In accordance with the present invention, the cycle of the mains power supply is monitored before rectification of the power supply. The monitoring is performed by the receiver and this allows the data broadcast receiver to detect exactly when the mains power is lost and detects the same sufficiently early so as to provide the receiver with sufficient time to react and implement shut-down procedures of the processor system in a controlled manner prior to the loss of power affecting the processor system and thereby avoids damage to the process capabilities within the receiver.

In use, and in one embodiment, the AC signal of the mains power supply to the receiver is monitored prior to rectification and is isolated from the rest of the circuit by using, for example, a capacitor, transformer or optical isolator. The pulses of the signal are then used to discharge a charging capacitor such that in normal operation the capacitor never charges to anything approaching its final voltage due to the cyclical discharge of the same. This continues for as long as the mains supply is maintained. If the mains supply is disconnected or fails, then the pulses will also stop and hence stop discharging the capacitor which will in turn allow the capacitor to charge fully. The provision of a voltage detector connected to the charging capacitor detects when the charging level exceeds a predetermined threshold voltage. When the voltage threshold is exceeded this indicates to the receiver that the mains power supply pulses are missing. The voltage detector is, in turn, then used to trigger an interrupt to the main processor system and, using appropriate software provided in the processing capability of the broadcast data receiver, the same is activated to shut down the processor of the smart card so that it suffers no damage and/or provide other shut-down functions within the broadcast data receiver.

The detection as indicated above provides sufficient time to react to an impending failure of power at the processing capability such that the shut-down functions can be performed prior to the failure of power at the processing capability.

As an alternative to detection of the capacitor charging as described above, the same invention can be achieved via a software based monitoring means to allow the detection of the power cycle pulses and if no cyclical change is detected for a predetermined period of time, an indication is generated as to the failure of the power supply.

It should also be appreciated that although the invention has been described with reference to a broadcast data receiver, the invention can also be adopted in any form of electrical or electronic apparatus which is provided with a mains power supply and in which there is a need to implement a shutdown procedure prior to mains power failure at the processing system. The invention and application described herein should be clearly interpreted as relating to this form of apparatus also.

## Claims

1. Electrical apparatus for the processing of digital data and said apparatus is rendered operable by the insertion of a processor into the same for connection to the processing capability to render the capability operational and detection means are provided in connection with the mains power supply to the receiver, prior to rectification of the supply and **characterised in that** upon detection of failure or absence of AC pulses in the power supply, the processor capability, or parts of the processor capability of the apparatus are shut down in a controlled manner by the electrical apparatus.

2. Apparatus according to claim 1 **characterised in that** the apparatus is a broadcast data receiver and the processor is provided as part of a smart card.

3. A broadcast data receiver according to claim 2 **characterised in that** the shut-down procedures are performed prior to the mains power supply failure affecting the processor capability of the broadcast data receiver.

4. A broadcast data receiver according to claim 2 **characterised in that** the shut-down procedure includes shutting down the processing capability of the processor mounted on the smart card which is inserted into the receiver and hence prevents damage to said processor.

5. A broadcast data receiver according to claim 4 **characterised in that** in addition or alternatively to the shut down of the processor mounted on the card, other shut-down procedures can be implemented.

6. A broadcast data receiver according to claim 5 **characterised in that** the shut down procedure includes storing data relating to a channel which is being viewed at the instant of power failure.

7. A broadcast data receiver according to claim 2, **characterised in that** data relating to user selections is stored in a storage means as part of the shut down procedure.

8. A broadcast data receiver, said receiver provided for the reception and processing of digital data for the generation of video, audio and auxiliary functions, said receiver is rendered operable by the insertion of a processor integrated circuit into the same for connection to the processing capability within the receiver and wherein detection means are provided in connection with the mains electricity supply to the receiver, prior to rectification and wherein upon detection of failure of AC pulses in the power supply, the processor capability, or parts of the processor capability of the broadcast data receiver are shut down.
